# EUROPÄISCHE PATENTSCHRIFT

(11) **EP 0 593 867 B1**
(45) Veröffentlichungstag und Bekanntmachung des Hinweises auf die Patenterteilung: **07.05.1997**
(21) Anmeldenummer: 93112849.0
(22) Anmeldetag: 11.08.1993
(51) Int. Cl.: F16K 31/122, F16K 3/02

(54) **Schnell schliessendes Ventil**
Quick-action stop valve
Soupape à fermeture rapide

(30) Priorität: 17.10.1992 DE 4235068
(43) Veröffentlichungstag der Anmeldung: 27.04.1994
(73) Patentinhaber: PAGG Produktions AG Giswil, 6074 Giswil (CH)
(72) Erfinder: Selb, Hanspeter, CH-6375 Beckenried (CH)
(74) Vertreter: Brommer, Hans Joachim, Dr.-Ing.

(56) Entgegenhaltungen:
- EP-A- 0 052 703
- DE-A- 2 152 748
- DE-A- 2 851 310
- DE-B- 2 416 967
- US-A- 2 877 780
- US-A- 3 202 162
- US-A- 3 702 620

## Beschreibung

Die vorliegende Erfindung betrifft ein schnell schliessendes Ventil, insbesondere für explosionsgefährdete Leitungen, mit einer quer zur Leitung verschiebbaren, den Leitungsquerschnitt absperrenden Ventilplatte, die in einem Gehäuse geführt ist und pneumatisch betätigt wird, wobei das Gehäuse als Druckzylinder fungiert, in dem die Ventilplatte unmittelbar an ihrer Stirnseite vor dem Druckmittel beaufschlagt wird.

Ein schnell schließendes Ventil ist durch die deutsche Offenlegungsschrift 28 51 310 bekannt, wobei es aber nicht um den Einbau in explosionsgefährdete Anlagen geht. Dabei ist die Ventilplatte über eine Kolbenstange mit einem Druckkolben verbunden, der seinerseits in einem Zylinder geführt und doppelseitig mit Druck beaufschlagbar ist. Dadurch kann er pneumatisch in die Geschlossenstellung und wieder in die Offenstellung zurückgefahren werden.

Aus der US-A-3 702 620 ist darüber hinaus ein, der Eingangs genannten Art entsprechendes, schnell schließendes Ventil bekannt, das in Atomtestanlagen verwendet wird, um Strahlungsmeßinstrumente vor der dem Strahlungsstoß unmittelbar nachfolgenden Schockwelle zu schützen. Dementsprechend ist dieses Ventil für die Bewegung relativ schwerer Ventilkörper ausgelegt und weist eine Dämpfungs- und Auffangvorrichtung auf, mit deren Hilfe der Ventilkörper nach dem Betätigen des Ventiles abgebremst und fest in der Geschlossenstellung verkeilt wird, um die zugehörige Leitung auch für längere Zeit druck- und strahlungsdicht abzudichten. Um das Ventil wieder zurückzusetzen, muß dieses zerlegt und Verschleißteile wie die Dämpfungs- und Auffangvorrichtung ersetzt werden. Im Gegensatz zu dem aus der DE-OS 28 51 310 bekannten Ventil braucht dieses aber keinen separaten Druckzylinder, da das Gehäuseinnere selbst mit Druck beaufschlagt wird, um den Ventilkörper in die Geschlossenstellung zu bewegen.

Die der Erfindung zugrundeliegende Aufgabe besteht nun darin, ein Schiebeventil zu entwickeln, das für explosionsgefährdete Anlagen geeignet ist, und das sich durch schnelles und sicheres Schließen auszeichnet. Desweiteren soll eine einfache, wartungsfreie Konstruktion angegeben werden, die es auch gestattet, daß der Schieber nach erfolgtem Schließen in die Ausgangsposition zurückgestellt und die Anlage ohne Montagearbeiten am Ventil sofort wieder in Betrieb genommen werden kann.

Diese Aufgabe wird erfindungsgemäß durch ein Ventil mit den Merkmalen des Anspruches 1 gelöst.

Die Luftaustrittsöffnungen, welche in der Nähe der Geschlossenstellung ein Abbremsen der Ventilplatte bewirken und durch Aufbau eines Gegendruckpolsters den Aufprall verringern, können vorteilhafterweise abgestufte Querschnitte aufweisen, wodurch sich eine dynamische Steuerung bewirken läßt. Hierdurch wird nicht nur die Anzahl der während des Schließvorgangs verbleibenden, noch nicht von der Ventilplatte verdeckten Luftaustrittsöffnungen verringert, sondern es läßt sich auch der Gesamtaustrittsquerschnitt so abstimmen, daß man eine wirkungsvolle Dämpfung der Schließbewegung erhält.

Hierbei umfaßt das Gehäuse die Ventilplatte zweckmäßigerweise auch an ihrer der druckmittelbeaufschlagten Stirnseite abgewandten Seite und weist dort Luftaustrittsöffnungen auf.

Es ist weiterhin zweckmäßig, wenn zwischen der Ventilplatte in ihrer Geschlossenstellung und der in Schließrichtung liegenden Gehäuseinnenseite ein Sicherheitsabstand zur Bildung eines Totraumes vorgesehen ist. Dies kann insbesondere dadurch erreicht werden, daß die längs des Verschiebeweges liegenden Luftaustrittsöffnungen einen ausreichenden Abstand von der in Schließrichtung liegenden Gehäuseinnenseite aufweisen. Wegen der hohen Schließgeschwindigkeit wird die Geschlossenstellung der Ventilplatte zwar schnell erreicht, doch wird die Ventilplatte erst im Totraum abgebremst, der als pneumatisches Federkissen fungiert. Die Ventilplatte federt nun, nachdem das entstandene Gegendruckpolster einen Aufprall auf die gegenüberliegende Gehäuseinnenseite verhindert hat, elastisch in die Geschlossenstellung zurück.

Dadurch, daß auf einen zusätzlichen Kolben verzichtet wird, ergibt sich nicht nur eine wesentliche Gewichtsersparnis, verbunden mit einer drastischen Verschlußzeitverringerung, sondern es werden auch die sonst regelmäßig zu wartenden Verbindunsteile zwischen Kolben und Schieber vermieden, über deren geringer Querschnittsfläche normalerweise Kräfte von ca. einer halben Tonnen weitergeleitet werden müssen. Vielmehr wirkt das Druckmittel direkt auf die im allgemeinen rechteckige Stirnseite der Ventilplatte, die dicht im Gehäuse geführt sein kann, so daß ein seitliches Vorbeiströmen ausgeschlossen ist. Zugleich ergibt sich dadurch ein Abdichten gegenüber dem Fördermedium, so daß das Ventil auch gut für Feststoff enthaltende Fördermedien geeignet ist.

Damit die Ventilplatte nach erfolgtem Abbremsen und Zurückfedern nicht über die Geschlossenstellung hinausfährt, wird sie dort mit Hilfe eines Arretierelementes festgehalten, welches automatisch, zum Beispiel durch Federkraft, einrastet.

Durch ein weiteres, vorzugsweise elastisch nachgiebiges Arretierelement ist sichergestellt, daß die Ventilplatte bei Normalbetrieb eine definierte Offenstellung einhält. Dieses Arretierelement, zum Beispiel eine gefederte Kugel wird bei Druckbeaufschlagung der Ventilplatte im Sinne der Schließbewegung einfach zur Seite geschoben.

In einer bevorzugten Ausführung der Erfindung ist die Ventilplatte als Lochplatte ausgebildet. Dadurch ergeben sich folgende Vorteile: Zum einen läßt sich ein stärkeres Gegendruckpolster aufbauen, weil die der druckmittelbeaufschlagten Stirnseite abgewandte Stirnseite mit dem Gehäuse ein abgeschlossenes, lediglich durch die Luftaustrittsöffnungen durchbrochenes Volumen bildet und der Aufbau des Gegendruckpolsters sofort, also nicht erst nach Durchqueren des Leitungsquerschnittes erfolgt. Zum anderen kann die Ventilplatte als doppelt wirkender Kolben fungieren, da sie nach Rückziehen des Arretierstiftes pneumatisch in die Offenstellung zurückgeschoben werden kann. Des weiteren sorgt die Ausführung als Lochplatte dafür, daß in der Offenstellung der Verschiebeweg der Ventilplatte gegen das Fördermedium abgedichtet ist. Da, wie bereits erwähnt, im vorliegenden Fall kein Verbindungsteil zwischen Druckkolben und Ventilplatte angebracht ist, was aus Stabilitätsgründen eine entsprechende Dicke der Ventilplatte erfordern würde, kann diese äußerst dünnwandig gestaltet werden.

Weitere Einzelheiten der Erfindung ergeben sich aus der nachfolgenden Beschreibung und den eine bevorzugte Ausführungsform darstellenden Zeichnungen.

Es zeigen:
- Figur 1: eine Vorderansicht des schnell schließenden Ventils in offener Stellung,
- Figur 2: eine Schnittdarstellung entlang der Linie A-B in Figur 1,
- Figur 3: eine Vorderansicht des Ventils in geschlossener Stellung,
- Figur 4: eine Schnittdarstellung entlang der Linie A-B in Figur 3.

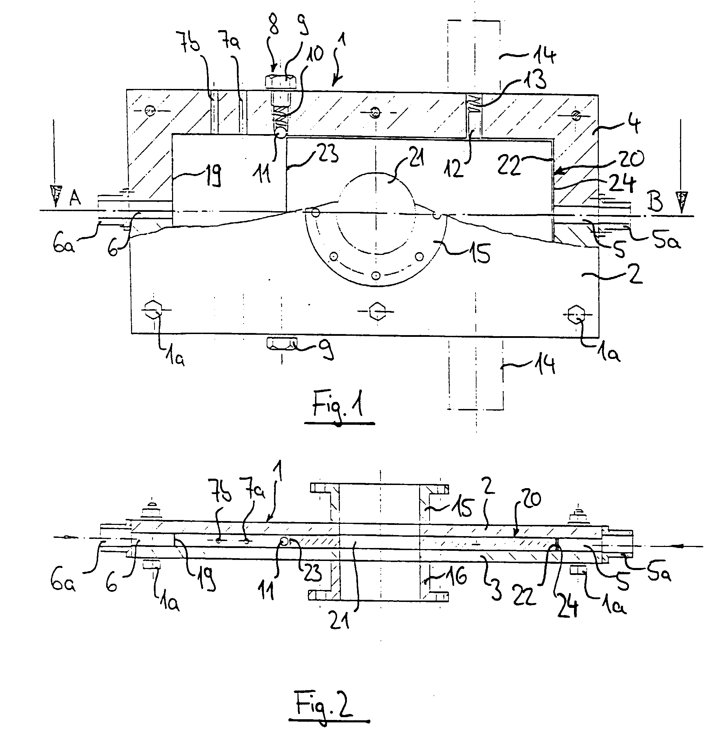

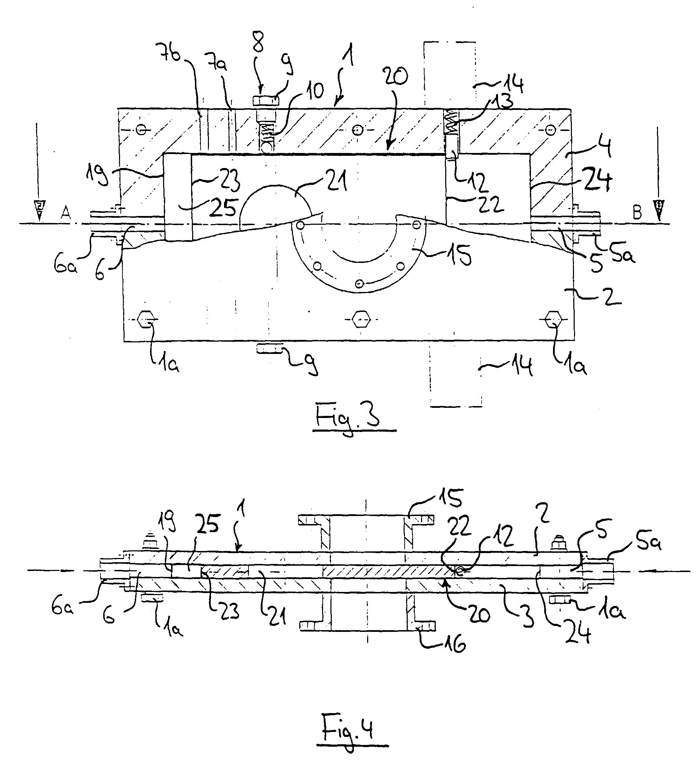

Das schnell schließende Ventil gemäß Figuren 1 bis 4 besteht aus einem Gehäuse 1, welches sich zusammensetzt aus einer in den Figuren 1 und 3 teilweise dargestellten vorderen Abdeckplatte 2 mit Anschlußstutzen 15, einer spiegelbildlichen hinteren Abdeckplatte 3 mit Anschlußstutzen 16 und einem Rahmen 4, welche mit Hilfe von Schrauben 1a miteinander verschraubt sind.

Der Rahmen 4 weist an seinen einander gegenüberliegenden Stirnseiten je eine Bohrung 5 bzw. 6 auf, welche über Druckmittelanschlüsse 5a bzw. 6a mit nicht dargestellten Druckmittelanlagen verbunden sind. Im Falle des Anschlußes 5a ist dies zweckmäßig ein aufgeladener Druckbehälter mit Ventil.

Im Inneren des Gehäuses ist eine rechteckige Ventilplatte 20 verschiebbar angeordnet, und zwar derart, daß ihre Öffnung 21 in der Offenstellung mit den beiden Anschlußstutzen 15 und 16 fluchtet, wogegen die Ventilplatte in der Geschlossenstellung (Figur 3 und 4) die Verbindung zwischen den Stutzen absperrt.

Die Breite und Dicke der Ventilplatte entspricht dem lichten Querschnitt des Gehäuses 1, so daß sie wie ein Kolben in ihm geführt ist. Die Offenstellung der Ventilplatte ist durch die Position zweier Arretierelemente 8 definiert, die sich zusammensetzen aus je einer Feststellschraube 9, einer Feder 10 und einer Kugel 11, und die elastisch in den Verschiebeweg hineinragen.

Wird nun die Ventilplatte 20 an ihrer Stirnseite 22, die zur gleichmäßigen Druckverteilung einen ausreichenden Abstand von der gegenüberliegenden Gehäuseinnenseite 24 besitzt, vom durch die Bohrung 5 in das Gehäuse gelangenden Druckmittel beaufschlagt, so wird das Arretierelement 8 (siehe Figur 1 und 3) von der Ventilplatte weggedrückt. Bei dieser Bewegung wird die Durchtrittsöffnung 21 der Ventilplatte 20 so nach links bewegt, daß das Stück der Ventilplatte, welches zwischen der Öffnung 21 und der Stirnseite 22 liegt, die Leitung versperrt. Dabei baut sich zwischen der Gehäuseinnenseite und der anderen Stirnseite 23 der Ventilplatte 20 ein Gegendruckpolster auf, weil die Luft aus speziell angeordneten Luftaustrittsöffnungen 7a und 7b nur allmählich entweichen kann. Es kommt dadurch zu einem Abbremsen der Ventilplatte, bevor deren Stirnseite 23 an der Gehäuseinnenseite 19 anstößt. Nun sorgt ein weiteres Arretierelement 12, das durch eine Feder 13 hinter der Ventilplatte in das Gehäuseinnere gedrückt wird, für ein Festhalten der Ventilplatte, so daß ein Zurückfedern und Vibrieren der Ventilplatte 22 ausgeschlossen ist.

Soll nun das Ventil wieder in die Offenstellung zurückgestellt werden, so wird das Arretierelement 12 durch eine nicht näher dargestellte Rückzieheinheit 14 gelöst, die Stirnseite 23 der Ventilplatte 20 durch ein Druckmittel beaufschlagt, welches durch die Bohrung 6 in das Gehäuseinnere gelangt, und hierdurch die Ventilplatte 20 soweit nach rechts bewegt, bis das Arretierelement 8 wieder in Eingriff gelangt und die Durchtrittsöffnung 21 mit den Anschlußstutzen 15 und 16 fluchtet.

Zusammenfassend ergibt sich also der Vorteil, daß ein wesentlich schnelleres Schließen des Ventils als bisher gewährleistet ist, da die Stirnseite der Ventilplatte unter Verzicht auf einen separaten Kolben unmittelbar vom Druckmittel beaufschlagt wird und das Ventilgehäuse als Druckzylinder fungiert. Außerdem erhöht sich die Zuverlässigkeit, da die hochbeanspruchte Verbindung zwischen Ventilplatte und Zylinder-Kolben-Element entfällt.

## Patentansprüche

1. Schnell schließendes Ventil, insbesondere für explosionsgefährdete Leitungen, mit einer quer zur Leitung verschiebbaren, den Leitungsquerschnitt absperrenden Ventilplatte (20), die in einem Gehäuse (1) geführt ist und pneumatisch betätigt wird,
wobei das Gehäuse (1) als Druckzylinder fungiert, in dem die Ventilplatte (20) unmittelbar an ihrer Stirnseite (22) von dem Druckmittel beaufschlagt wird,
dadurch gekennzeichnet,
daß im Gehäuse längs des Verschiebeweges der Ventilplatte (20) mehrere Luftaustrittsöffnungen (7a, 7b) derart angeordnet sind, daß sich gegen Ende der Schließbewegung ein Gegendruckpolster an der der druckmittelbeaufschlagten Stirnseite (22) abgewandten Stirnseite (23) der Ventilplatte (20) aufbaut.

2. Schnell schließendes Ventil nach Anspruch 1,
dadurch gekennzeichnet,
daß das Gehäuse (1) die Ventilplatte (20) auch an ihrer der druckmittelbeaufschlagten Stirnseite abgewandten Seite (23) umfaßt und dort Luftaustrittsöffnungen (7a, 7b) aufweist.

3. Schnell schließendes Ventil nach Anspruch 1 oder 2,
dadurch gekennzeichnet,
daß die Luftaustrittsöffnungen (7a, 7b) an den senkrecht zu der genannten Stirnseite (22) der Ventilplatte verlaufenden Gehäusewänden (4) angeordnet sind.

4. Schnell schließendes Ventil nach Anspruch 1,
dadurch gekennzeichnet,
daß zwischen der Ventilplatte (20) in ihrer Geschlossenstellung und der in Schließrichtung liegenden Gehäuseinnenseite (19) ein Sicherheitsabstand zur Bildung eines Totraumes (25) vorgesehen ist.

5. Schnell schließendes Ventil nach Anspruch 1,
dadurch gekennzeichnet,
daß die längs des Verschiebeweges liegenden Luftaustrittsöffnungen (7a, 7b) einen ausreichenden Abstand von der in Schließrichtung liegenden Gehäuseinnenseite (19) aufweisen.

6. Schnell schließendes Ventil nach Anspruch 1,
dadurch gekennzeichnet,
daß die Ventilplatte (20) im Bereich der Schließstellung durch ein Arretierelement (12) gehalten wird.

7. Schnell schließendes Ventil nach Anspruch 1,
dadurch gekennzeichnet,
daß die Ventilplatte (20) durch ein weiteres, vorzugsweise elastisch nachgiebiges Arretierelement (8) in der Offenstellung gehalten wird.

8. Schnell schließendes Ventil nach Anspruch 1,
dadurch gekennzeichnet,
daß die Ventilplatte (20) als Lochplatte ausgebildet ist.

## Revendications

1. Soupape à fermeture rapide, en particulier pour des conduites à risque d'explosion, comprenant une plaque de soupape (20) qui peut coulisser transversalement par rapport à la conduite, qui ferme la section transversale de la conduite, qui est guidée dans un carter (1) et qui est actionnée par voie pneumatique, le carter (1) fonctionnant comme un cylindre dans lequel la plaque de soupape (20) est soumise directement à l'action du fluide sous pression sur son côté frontal (22), caractérisée par le fait que plusieurs orifices de sortie de l'air (7a, 7b) sont disposés dans le carter le long du trajet de coulissement de la plaque de soupape (20) d'une manière telle qu'un coussin de fluide s'opposant à la pression se forme vers la fin du déplacement de fermeture sur le côté frontal (23) de la plaque de soupape (20) qui est opposé au côté frontal (22) soumis à l'action du fluide sous pression.

2. Soupape à fermeture rapide selon la revendication 1, caractérisée par le fait que le carter (1) entoure également la plaque de soupape (20) sur son côté (23) qui est opposé au côté frontal soumis à l'action du fluide sous pression, et qu'il présente à cet endroit des orifices de sortie de l'air (7a, 7b).

3. Soupape à fermeture rapide selon la revendication 1 ou 2, caractérisée par le fait que les orifices de sortie de l'air (7a, 7b) sont disposés sur les parois (4) du carter qui s'étendent perpendiculairement audit côté frontal (22) de la plaque de soupape.

4. Soupape à fermeture rapide selon la revendication 1, caractérisée par le fait qu'une distance de sécurité destinée à la formation d'un volume mort (25) est prévue entre la plaque de soupape (20) dans sa position de fermeture et le côté intérieur (19) du carter qui est situé dans la direction de la fermeture.

5. Soupape à fermeture rapide selon la revendication 1, caractérisée par le fait que les orifices de sortie de l'air (7a, 7b) situés le long du trajet de coulissement présentent une distance suffisante par rapport au côté intérieur (19) du carter qui est situé dans la direction de la fermeture.

6. Soupape à fermeture rapide selon la revendication 1, caractérisée par le fait que la plaque de soupape (20) est maintenue dans la région de la position de fermeture par un élément d'arrêt (12).

7. Soupape à fermeture rapide selon la revendication 1, caractérisée par le fait que la plaque de soupape (20) est maintenue dans la position d'ouverture par un autre élément d'arrêt (8) qui peut de préférence s'effacer d'une manière élastique.

8. Soupape à fermeture rapide selon la revendication 1, caractérisée par le fait que la plaque de soupape (20) est réalisée sous la forme d'une plaque perforée.

## Claims

1. A fast-closing valve, especially for lines endangered by explosion, having a valve plate (20) which can be shifted transversely to the line and shut off the cross-section of the line, which is guided in a housing (1) and is activated pneumatically, the housing (1) functioning as a pressure cylinder in which pressure is directly applied by the pressure medium to the front face (22) of the valve plate (20), characterised by the fact that there are several air-outlet openings (7a, 7b) in the housing along the shifting path of the valve plate (20) positioned in such a way that a counter-pressure cushion is generated towards the end of the closing movement of the valve plate (20) at the front face (23) opposite to the front face (22) which is under pressure from the pressure medium.

2. A fast-closing valve in accordance with claim 1 characterised by the fact that the housing (1) also surrounds the front face (23) of the valve plate (20) opposite to the front face which is under pressure from the pressure medium and has a number of air-outlet openings (7a, 7b) there.

3. A fast-closing valve in accordance with claim 1 or 2 characterised by the fact that the air-outlet openings (7a, 7b) are positioned on the housing walls (4) perpendicular to the specified front face (22) of the valve plate.

4. A fast-closing valve in accordance with claim 1 characterised by the fact that a safety distance is provided between the valve plate (20) in its closed position and the inner side (19) of the housing in the closing direction to form a dead space (25).

5. A fast-closing valve in accordance with claim 1 characterised by the fact that the air-outlet openings (7a, 7b) lying along the shifting path are at an adequate distance from the inner side (19) of the housing in the closing direction.

6. A fast-closing valve in accordance with claim 1 characterised by the fact that the valve plate (20) is held in the region of the closed position by an arresting element (12).

7. A fast-closing valve in accordance with claim 1 characterised by the fact that the valve plate (20) is held in the open position by a further arresting element (8), preferably an elastic yielding arresting element.

8. A fast-closing valve in accordance with claim 1 characterised by the fact that the valve plate (20) has an orifice therein.
